(19) 

Europäisches Patentamt

European Patent Office

Office européen des brevets

(11) **EP 4 768 275 A1**

(12) # EUROPEAN PATENT APPLICATION

(43) Date of publication:
01.07.2026 Bulletin 2026/27

(21) Application number: 25224703.6

(22) Date of filing: 17.12.2025

(51) International Patent Classification (IPC):
**B60C 9/18** (2006.01)   **B60C 11/01** (2006.01)
**B60C 11/03** (2006.01)   **B60C 9/28** (2006.01)

(52) Cooperative Patent Classification (CPC):
**B60C 11/0302; B60C 9/18; B60C 9/28;
B60C 11/0083; B60C 11/01; B60C 11/0306;**
B60C 2009/1828; B60C 2009/2016;
B60C 2011/0016; B60C 2011/0025;
B60C 2011/0346; B60C 2013/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 26.12.2024   JP 2024231317
31.01.2025   JP 2025015425
31.01.2025   JP 2025015421
31.01.2025   JP 2025015424

(71) Applicant: SUMITOMO RUBBER INDUSTRIES,
LTD.
Kobe-shi, Hyogo 651-0072 (JP)

(72) Inventors:
• CHISATO, OMORI
  Kobe-shi, 651-0072 (JP)
• MASAHIRO, NAGASE
  Kobe-shi, 651-0072 (JP)
• HIROSHI, KIKUCHI
  Kobe-shi, 651-0072 (JP)
• RENA, ONITSUKA
  Kobe-shi, 651-0072 (JP)

(74) Representative: Forresters IP LLP
Skygarden
Erika-Mann-Straße 11
80636 München (DE)

(54) **PNEUMATIC TIRE**

(57)   A pneumatic tire has a profile including a ground contact surface and a first side outer surface. The ground contact surface has a first virtual line inclined at a first angle of 74 to 80 degrees relative to a tire radial direction. The first side outer surface has a second virtual line inclined at a second angle of 36 to 40 degrees relative to the tire radial direction. The tread portion has a belt layer including belt cords arranged therein at an angle $\lambda$ relative to a tire circumferential direction. A ride comfort index ($\lambda \times t / TW$) is from 1.0 to 2.0. The ride comfort index is defined by the angle $\lambda$ in degree, a first distance ($t$) in millimeter in the tire radial direction from a first ground contact edge to a tire equator on the ground contact surface, and a ground contacting width ($TW$) in millimeter.

FIG.1

EP 4 768 275 A1

**Description**

RELATED APPLICATIONS

This application claims the benefit of foreign priority to Japanese Patent Application No. JP2024-231317, filed December 26, 2024, JP2025-015421, filed January 31, 2025, JP2025-015424, files January 31, 2025, and JP2025-015425, filed January 31, 2025, which are incorporated by reference in its entirety.

FIELD OF THE INVENTION

The present invention relates to a pneumatic tire.

BACKGROUND OF THE INVENITON

Various pneumatic tires having specific profiles have been proposed in the past. For example, Japanese Unexamined Patent Application Publication No. 2020-019400 (Patent Document 1) proposes a pneumatic tire capable of achieving both noise performance and fuel efficiency performance by including sidewall profiles each having a single radius of curvature from a maximum tire width position thereof to a radially outer end position thereof.

SUMMARY OF THE INVENTION

However, resistances related to the fuel efficiency performance include air resistance during running in addition to rolling resistance, which is improved in the pneumatic tire of the Patent Document 1, and further improvement in the air resistance during running was expected in the pneumatic tire of the Patent Document 1 as well. Furthermore, profiles that improve the rolling resistance tend to deteriorate ride comfort performance, and there has been a demand for improvements in the ride comfort performance.

The present invention was made in view of the above, and a primary object thereof is to provide a pneumatic tire capable of achieving both the fuel efficiency performance and the ride comfort performance.

The present invention is a pneumatic tire including a profile defined by an outer surface of the pneumatic tire in a standard state in a tire meridian section, wherein

the profile includes a ground contact surface of a tread portion extending from a first ground contact edge to a second ground contact edge, and a first side outer surface of one of sidewall portions extending inward in a tire radial direction from the first ground contact edge,

the first side outer surface has a first position defined thereon at a distance of 15% of a tire section height radially inward away from a tire equator on the ground contact surface,

the tread portion has a first shoulder circumferential groove extending in a tire circumferential direction on a side closest to the first ground contact edge between the tire equator and the first ground contact edge, and a first shoulder land region demarcated by the first shoulder circumferential groove and the first ground contact edge,

the ground contact surface has a first virtual line inclined inward in the tire radial direction as it goes outward in a tire axial direction,

the first virtual line is a tangent line at a midpoint in the tire axial direction of the first shoulder land region,

the first virtual line is inclined at a first angle in the range from 74 to 80 degrees with respect to the tire radial direction,

the first side outer surface has a second virtual line inclined to the same side as the first virtual line with respect to the tire radial direction,

the second virtual line is a tangent line at the first position,

the second virtual line is inclined at a second angle in the range from 36 to 40 degrees with respect to the tire radial direction,

the ground contact surface has a ground contacting width (TW),

the ground contacting width (TW) is a distance in the tire axial direction from the first ground contact edge to the second ground contact edge,

the first ground contact edge is located at a position radially inward away from the tire equator on the ground contact surface by a first distance (t),

the tread portion has a belt layer having belt cords arranged therein at an angle $\lambda$ in degree with respect to the tire circumferential direction,

a ride comfort index ($\lambda \times t/TW$) is defined by the angle $\lambda$ in degree of the belt cords with respect to the tire circumferential direction, the first distance (t) in millimeter in the tire radial direction from the first ground contact edge to the tire equator on the ground contact surface, and the ground contacting width (TW) in millimeter, and

the ride comfort index ($\lambda \times$t/TW) is in the range from 1.0 to 2.0.

The pneumatic tire of the present invention has the above-described configuration, and thus can achieve both the fuel efficiency performance and the ride comfort performance.

BRIEF DESCRIPTION OF THE DRAWINGS

FIG. 1 is a tire meridian section showing a pneumatic tire according to an embodiment of the present invention.

FIG. 2 is an enlarged view of part (A) of a profile shown in FIG. 1.

FIG. 3 is a schematic development view of a belt layer.

FIG. 4 is a schematic diagram of a mold for molding the pneumatic tire.

FIG. 5 is a schematic diagram showing a shape of a foot print of the pneumatic tire according to the second embodiment of the present disclosure.

FIG. 6 is a development view of a tread portion of the pneumatic tire according to the third embodiment of the present disclosure.

DETAILED DESCRIPTION OF THE INVENTION

An embodiment of the present invention will now be described in conjunction with accompanying drawings.

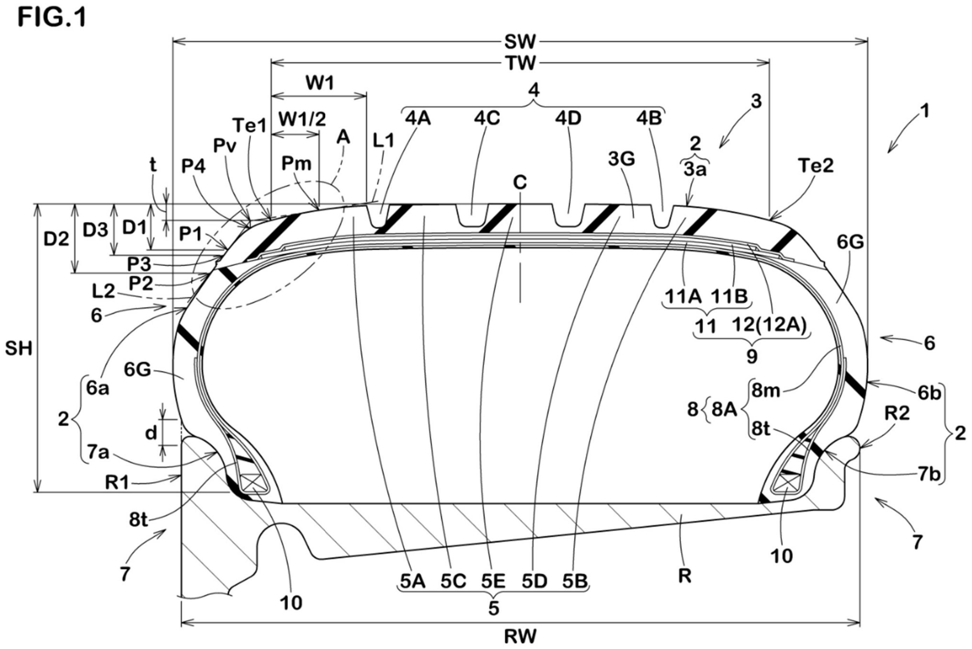

FIG. 1 is a tire meridian section showing a pneumatic tire 1 of the present embodiment in a standard state. Here, the term "standard state" refers to a state in which the pneumatic tire 1 is mounted on a standard rim (R), inflated to a standard inner pressure, and loaded with no tire load. Hereinafter, dimensions and the like of various parts of the pneumatic tire 1 are values measured in the standard state unless otherwise noted.
The term "standard rim (R)" refers to a wheel rim specified for the concerned tire by a standard included in a standardization system on which the pneumatic tire 1 is based, for example, the "normal wheel rim" in JATMA, "Design Rim" in TRA, and "Measuring Rim" in ETRTO. When there is no standardization system that includes the standard on which the pneumatic tire 1 is based, the "standard rim (R)" is a wheel rim with the smallest rim diameter and the narrowest rim width on which the pneumatic tire can be mounted without causing air leakage.
The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO. When there is no standardization system that includes the standard on which the pneumatic tire 1 is based, the "standard inner pressure" is the air pressure determined for each tire by the manufacturer.
As shown in FIG. 1, the pneumatic tire 1 is suitable for use as a tire for passenger cars, for example. The pneumatic tire 1 of the present embodiment has a profile 2 defined by an outer surface in the tire meridian section of the pneumatic tire 1 in the standard state. The profile 2 in the present embodiment includes a ground contact surface (3a) of a tread portion 3 extending from a first ground contact edge (Te1) to a second ground contact edge (Te2).
The ground contact surface (3a) has a tire equator (C), which is on a midpoint in a tire axial direction between the first ground contact edge (Te1) and the second ground contact edge (Te2), and a ground contacting width (TW), which is a distance in the tire axial direction between the first ground contact edge (Te1) and the second ground contact edge (Te2), for example. It is preferred that the first ground contact edge (Te1) is located at a distance (t) (first distance (t)) inward in a tire radial direction away from the point of the tire equator (C) on the ground contact surface (3a).
Here, the "first ground contact edge (Te1)" and the "second ground contact edge (Te2)" refer to the outermost ground contact positions in the tire axial direction when the pneumatic tire 1 in the standard state is in contact with a flat surface with zero camber angle by being loaded with 70% of a standard tire load.
The term "standard tire load" refers to a tire load specified for the concerned tire by a standard included in a standardization system on which the pneumatic tire 1 is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. When there is no standardization system that includes the standard on which the pneumatic tire 1 is based, the "standard tire load" is a tire load determined for each tire by the manufacturer and the like, as the maximum tire load that can be applied when using the pneumatic tire 1.

The tread portion 3 in the present embodiment has a plurality of circumferential grooves 4 extending in a tire circumferential direction and a plurality of land regions 5 demarcated by the circumferential grooves 4. The circumferential grooves 4 may extend linearly in the tire circumferential direction, or may extend in a zigzag pattern, or may be a mixture of linear and zigzag grooves, for example. The tread portion 3 configured as such helps to achieve both rigidity and a drainage property of the land regions 5.

The circumferential grooves 4 in the present embodiment include a first shoulder circumferential groove (4A) extending in the tire circumferential direction between the tire equator (C) and the first ground contact edge (Te1) on the side closest to the first ground contact edge (Te1). The land regions 5 in the present embodiment includes a first shoulder land region (5A) demarcated by the first shoulder circumferential groove (4A) and the first ground contact edge (Te1).

It is preferred that the ground contact surface (3a) has a first virtual line (L1), which is a tangent line at a midpoint (Pm) in the tire axial direction of the first shoulder land region (5A), inclined inward in the tire radial direction as it goes outward in the tire axial direction. The ground contact surface (3a) configured as such helps to suppress air separation by smoothing the flow of air during running flowing from the tread portion 3 to sidewall portions 6 (described later).

Here, the midpoint (Pm) of the first shoulder land region (5A) is a position that is a distance (W1/2), which is half the maximum width (W1) of the first shoulder land region (5A) in the tire axial direction, axially inward away from the first ground contact edge (Te1).

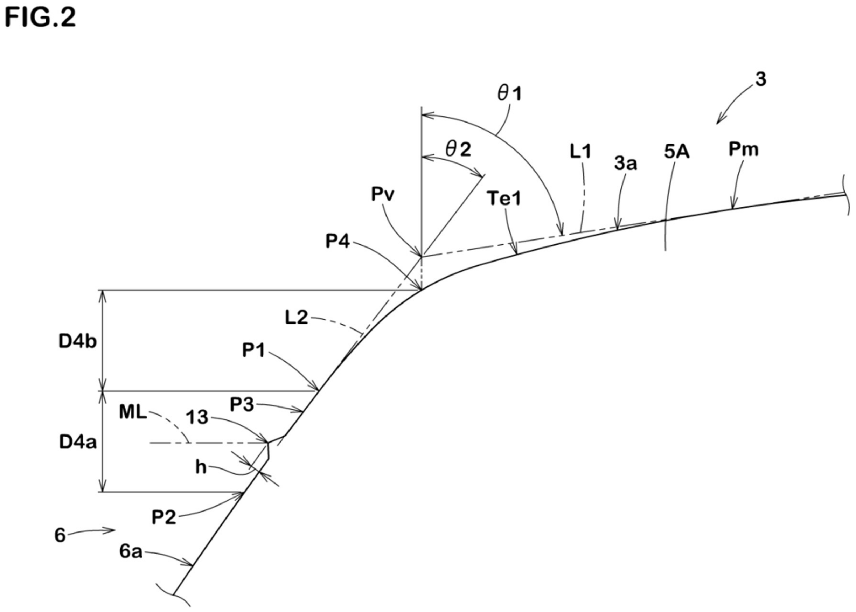

FIG. 2 is an enlarged view of part (A) of the profile 2 shown in FIG. 1. As shown in FIG. 2, the first virtual line (L1) in the present embodiment is inclined at a first angle $\theta1$ with respect to the tire radial direction. It is preferred that the first angle $\theta1$ is equal to or greater than 74 degrees. By setting the first angle $\theta1$ to 74 degrees or more, it is possible that excessive deformation is suppressed at the time of contact with the ground and that the rolling resistance is decreased. From such a point of view, the first angle $\theta1$ is more preferably 76 degrees or more, and even more preferably 77 degrees or more.

It is preferred that the first angle $\theta1$ is equal to or less than 80 degrees. Since the first angle $\theta1$ is 80 degrees or less, the air flows smoothly from the tread portion 3 to the sidewall portions 6 (described later) during running, which suppresses air separation and reduces the air resistance during running. From such a point of view, the first angle $\theta1$ is more preferably 78 degrees or less, and even more preferably 77 degrees or less.

For these reasons, the first angle $\theta1$ is preferably in the range from 74 to 80 degrees, more preferably in the range from 76 to 78 degrees, and even more preferably 77 degrees. It should be noted that the combination of the upper and lower limits of these numerical ranges can be selected arbitrarily.

As shown in FIG. 1, the profile 2 of the present embodiment includes a first side outer surface (6a) of the sidewall portion 6 extending inward in the tire radial direction from the first ground contact edge (Te1), and a first bead outer surface (7a) of one of bead portions 7 located inward in the tire radial direction of the first side outer surface (6a).

In the present embodiment, a first position (P1) is defined on the first side outer surface (6a) at a distance (D1) of 15% of a tire section height (SH) radially inward away from the tire equator (C) on the ground contact surface (3a). It is preferred that a second virtual line (L2), which is a tangent line at the first position (P1) of the first side outer surface (6a), is inclined to the same side as the first virtual line (L1) with respect to the tire radial direction. The first side outer surface (6a) configured as such helps to suppress air separation by smoothing the flow of air during running from the tread portion 3 to one of the sidewall portions 6 having the first side outer surface (6a).

As shown in FIG. 2, the second virtual line (L2) in the present embodiment is inclined at a second angle $\theta2$ with respect to the tire radial direction. It is preferred that the second angle $\theta2$ is equal to or greater than 36 degrees. Since the second angle $\theta2$ is 36 degrees or more, the air flows smoothly from the tread portion 3 to the sidewall portions 6 during running, and the air separation is suppressed, thereby, it is possible that the air resistance during running is decreased. From this point of view, the second angle $\theta2$ is more preferably 37 degrees or more, and even more preferably 38 degrees or more.

It is preferred that the second angle $\theta2$ is equal to or less than 40 degrees. By setting the second angle $\theta2$ to 40 degrees or less, the separation of air on the radially outer sides of the sidewall portions 6 is suppressed, therefore, it is possible that the air resistance during running is decreased. From such a point of view, the second angle $\theta2$ is more preferably 39 degrees or less, and even more preferably 38 degrees or less.

For these reasons, the second angle $\theta2$ is preferably in the range from 36 to 40 degrees, more preferably in the range from 37 to 39 degrees, and even more preferably 38 degrees. It should be noted that the combination of the upper and lower limits of these numerical ranges can be selected arbitrarily.

As shown in FIG. 1, the pneumatic tire 1 of the present embodiment has a carcass 8 extending from one of the bead portions 7 to the other one of the bead portions 7 via the tread portion 3 and the sidewall portions 6, and a reinforcing layer 9 disposed outside the carcass 8 in the tire radial direction in the tread portion 3. In the pneumatic tire 1 configured as such, the reinforcing layer 9 improves the rigidity of the tread portion 3, thereby, it is possible that the ride comfort performance is improved.

The carcass 8 has at least one, for example one, carcass ply 8A including carcass cords (not shown) arranged at an angle in the range from 60 to 90 degrees with respect to the tire circumferential direction. It is preferred that the carcass ply 8A includes a main body portion (8m) spanning a pair of the bead portions 7, and a pair of turned-up portions (8t) that are each continuous with the main body portion (8m) on a respective axial side and are each turned up around a respective one of bead cores 10 from the inside to the outside in the tire axial direction. The carcass 8 configured as such serves to suppress deformation when a heavy load is applied, and improve the ride comfort performance of the pneumatic tire 1.

The reinforcing layer 9 includes a belt layer 11 disposed adjacent to the carcass 8 and a band layer 12 disposed outside the belt layer 11 in the tire radial direction, for example. That is, the belt layer 11 and the band layer 12 are disposed in the tread portion 3 in the present embodiment. In the pneumatic tire 1 configured as such, it is possible that the belt layer 11 and the band layer 12 improve the rigidity of the tread portion 3.

The belt layer 11 includes a first belt ply (11A) and a second belt ply (11B) disposed outside the first belt ply 11A in the tire radial direction, for example. The belt layer 11 configured as such increases the rigidity in the tire axial direction of the tread portion 3, suppresses excessive deformation, thereby, it is possible that the ride comfort performance of the pneumatic tire 1 is improved.

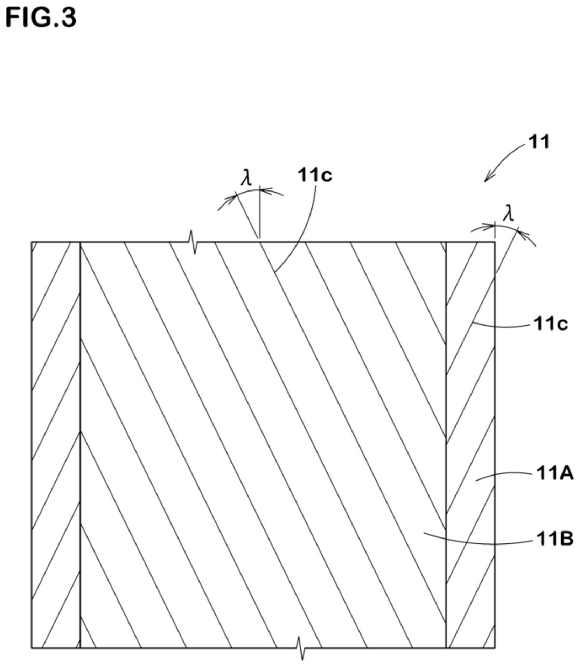

FIG. 3 is a schematic development view of the belt layer 11. As shown in FIG. 3, in the first belt ply (11A) of the belt layer 11, belt cords (11c) are arranged at an angle $\lambda$ with respect to the tire circumferential direction, for example. In the second belt ply (11B) of the belt layer 11 in the present embodiment, the belt cords (11c) are arranged at the angle $\lambda$ with respect to the tire circumferential direction so that they are inclined to a side opposite to the belt cords (11c) of the first belt ply (11A) with respect to the tire circumferential direction. The belt layer 11 configured as such decreases the rigidity in the tire circumferential direction of the tread portion 3, thereby, it is possible that the input when going over a protrusion on the road surface is softened.

Here, a ride comfort index ($\lambda \times t/TW$) is defined by using the angle $\lambda$ (degree) of the belt cords (11c) with respect to the tire circumferential direction, the distance (t) (mm) in the tire radial direction from the first ground contact edge (Tel) to the tire equator (C) on the ground contact surface (3a), and the ground contacting width (TW) (mm). The ride comfort index ($\lambda \times t/TW$) is the ratio ($\lambda \times t/TW$) of the product ($\lambda \times t$) to the ground contacting width (TW) (mm). The product ($\lambda \times t$) is a product of the angle $\lambda$ (degree) of the belt cords (11c) with respect to the tire circumferential direction and the radial distance (t) (mm) between the first ground contact edge (Tel) and the tire equator (C) on the ground contact surface (3a).

It is preferred that the ride comfort index ($\lambda \times t/TW$) is 1.0 or greater. By setting the ride comfort index ($\lambda \times t/TW$) to 1.0 or higher, the input when going over a protrusion on the road surface is made gentler, thereby, it is possible that the ride comfort performance of the pneumatic tire 1 is improved. From such a point of view, it is more preferred that the ride comfort index ($\lambda \times t/TW$) is 1.3 or more.

It is preferred that the ride comfort index ($\lambda \times t/TW$) is equal to or less than 2.0. By setting the ride comfort index ($\lambda \times t/TW$) to 2.0 or less, it is possible that an increase in the outer diameter of the pneumatic tire 1 during high-speed running is suppressed, and that durability performance of the pneumatic tire 1 is improved. From this point of view, it is more preferred that the ride comfort index ($\lambda \times t/TW$) is 1.8 or less.

For these reasons, the ride comfort index ($\lambda \times t/TW$) is preferably in the range from 1.0 to 2.0, and more preferably in the range from 1.3 to 1.8. It should be noted that the combination of the upper and lower limits of these numerical ranges can be selected arbitrarily.

Owing to the synergistic effect of the above-described components, it is possible that the pneumatic tire 1 having the profile 2 and the belt layer 11 in the present embodiment achieves both the fuel efficiency performance and the ride comfort performance. Here, when the belt layer 11 has multiple belt plies and the angle $\lambda$ of the belt cords in one or more of the belt plies is different from the angle $\lambda$ of the belt cords in the other belt plies, the angle $\lambda$ of the belt cords (11c) of the outermost belt ply in the tire radial direction, which is the angle $\lambda$ of the belt cords (11c) of the second belt ply (11B) in the present embodiment, is used for the angle $\lambda$ of the belt cords (11c) in the ride comfort index ($\lambda \times t/TW$).

In a more preferred embodiment, the angle $\lambda$ of the belt cords (11c) with respect to the tire circumferential direction is 22 degrees or greater. By setting the angle $\lambda$ of the belt cords (11c) to 22 degrees or more, the rigidity of the tread portion 3 in the tire axial direction is increased, therefore, it is possible that the rigidity in the tire circumferential direction is decreased. From this point of view, it is more preferred the angle $\lambda$ of the belt cords (11c) is 26 degrees or more.

It is preferred that the angle $\lambda$ of the belt cords (11c) with respect to the tire circumferential direction is 34 degrees or less. By setting the angle $\lambda$ of the belt cords (11 c) to 34 degrees or less, it is possible that the rigidity of the tread portion 3 in the tire circumferential direction is prevented from becoming excessively small. From such a point of view, it is more preferred that the angle $\lambda$ of the belt cords (11c) is 30 degrees or less.

For these reasons, the angle $\lambda$ of the belt cords (11c) with respect to the tire circumferential direction is preferably in the range from 22 to 34 degrees, more preferably in the range from 26 to 30 degrees. It should be noted that the combination of the upper and lower limits of these numerical ranges can be selected arbitrarily.

As shown in FIG. 1, the band layer 12 has at least one, for example, one band ply (12A) including band cords (not shown) arranged at an angle of 5 degrees or less with respect to the tire circumferential direction. It is possible that the band layer 12 configured as such improves the rigidity of the tread portion 3 in the tire circumferential direction by a hoop effect.

It is preferred that the distance (t) between the first ground contact edge (Tel) and the tire equator (C) on the ground contact surface (3a) is 2% or more of the ground contacting width (TW). Since the distance (t) is 2% or more of the ground contacting width (TW), the air flows smoothly from the tread portion 3 to the sidewall portions 6 during running, thereby, it is possible that the air separation is suppressed and that the air resistance during running is decreased. From this point of view, it is more preferred that the distance (t) between the first ground contact edge (Te1) and the tire equator (C) on the ground contact surface (3a) is 3% or more of the ground contacting width (TW).

It is preferred that the distance (t) between the first ground contact edge (Te1) and the tire equator (C) on the ground contact surface (3a) is 6% or less of the ground contacting width (TW). By setting the distance (t) to 6% or less of the ground contacting width (TW), it is possible that excessive deformation during ground contact is suppressed and that the rolling resistance is reduced. From such a point of view, it is more preferred that the distance (t) in the tire radial direction between the first ground contact edge (Te1) and the tire equator (C) on the ground contact surface (3a) is 5% or less of the ground contacting width (TW).

For these reasons, the distance (t) between the first ground contact edge (Te1) and the tire equator (C) is preferably in the range from 2% to 6%, and more preferably in the range from 3% to 5% of the ground contacting width (TW). It should be noted that the combination of the upper and lower limits of these numerical ranges can be selected arbitrarily.

It is preferred that the maximum width (W1) of the first shoulder land region (5A) in the tire axial direction is 20% or more of the ground contacting width (TW). Since the maximum width (W1) of the first shoulder land region (5A) is 20% or more of the ground contacting width (TW), air swirled around while running due to the vehicle is smoothly guided to the first shoulder circumferential groove (4A), therefore, it is possible that the air resistance during running is decreased. Further, by locating the first shoulder circumferential groove (4A) at a position of high ground contact pressure, it helps to increase the driving speed at which hydroplaning occurs. From these points of view, it is more preferred that the maximum width (W1) of the first shoulder land region (5A) is 22% or more of the ground contacting width (TW).

It is preferred that the maximum width (W1) in the tire axial direction of the first shoulder land region (5A) is 30% or less of the ground contacting width (TW). Since the maximum width (W1) of the first shoulder land region (5A) is 30% or less of the ground contacting width (TW), excessive increase in the rigidity of the first shoulder land region (5A) is suppressed, which makes it possible to improve steering stability performance of the pneumatic tire 1, and also helps to improve the drainage property in axial outer areas. From such a point of view, it is more preferred that the maximum width (W1) of the first shoulder land region (5A) is 28% or less of the ground contacting width (TW).

For these reasons, the maximum width (W1) in the tire axial direction of the first shoulder land region (5A) is preferably in the range from 20% to 30%, more preferably in the range from 22% to 28%, of the ground contacting width (TW). It should be noted that the combination of the upper and lower limits of these numerical ranges can be selected arbitrarily.

The pneumatic tire 1 of the present embodiment does not have a rim guard in the sidewall portion 6. Since the pneumatic tire 1 configured as such does not have a rim guard which has a large effect on the air resistance, it is possible that the air resistance during running is lowered.

The standard rim (R) has a first rim edge (R1) which is an end on the first ground contact edge (Te1) side, a second rim edge (R2) which is an end on the second ground contact edge (Te2) side, and a maximum width (RW) which is a distance in a rim width direction from the first rim edge (R1) to the second rim edge (R2), for example.

It is preferred that the pneumatic tire 1 has a tire section width (SW) that is 6 mm or more larger than the maximum width (RW) in the rim width direction of the standard rim (R). It is possible that the pneumatic tire 1 configured as such prevents the standard rim (R) from coming into contact with a curb and the like even without a rim guard and achieves both the durability performance and the fuel efficiency performance. Here, the tire section width (SW) is the maximum width in the profile 2, and does not include local protrusions, rim guards, and so on.

It is preferred that a distance (d) in the tire radial direction from the first rim edge (R1) to the first bead outer surface (7a), more specifically from the radially outer end of the first rim edge (R1) to the first bead outer surface (7a) at the axial position of the radially outer end of the first rim edge (R1), is 3 mm or less. The first bead outer surface (7a) configured as such suppresses the generation of turbulence between the first rim edge (R1) and the first bead outer surface (7a), and maintains the kinetic energy of the air, thereby, it is possible that the air resistance during running is decreased.

It is preferred that a second position (P2) and a third position (P3) are defined on the first side outer surface (6a). The second position (P2) is a position radially inward from the tire equator (C) on the ground contact surface (3a) by a distance (D2) of 25% of the tire section height (SH), and the third position (P3) is a position radially inward from the tire equator (C) on the ground contact surface (3a) by a distance (D3) of 19 mm. In the present embodiment, a fourth position (P4) is defined on the first side outer surface (6a) that is located radially inside a virtual intersection (Pv) between the first virtual line (L1) and the second virtual line (L2).

As shown in FIG. 2, it is preferred that a distance (D4a) in the tire radial direction from the first position (P1) to the second position (P2) is equal to a distance (D4b) in the tire radial direction from the first position (P1) and the fourth position (P4). In this case, the first position (P1) is an intermediate position in the tire radial direction between the second position (P2) and the fourth position (P4). The first position (P1) configured as such is suitable as a representative point of a radially outer area of the first side outer surface (6a).

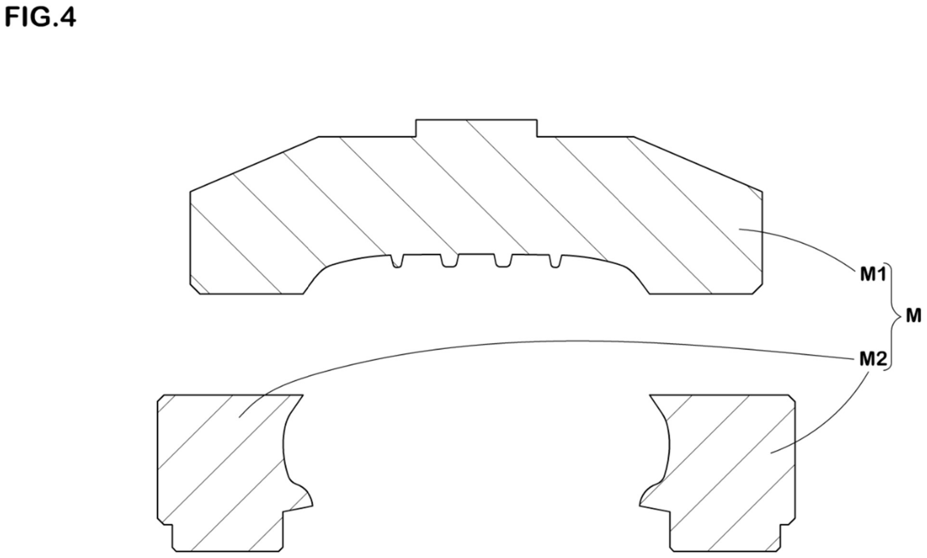

FIG. 4 is a schematic diagram of a mold (M) for molding the pneumatic tire 1. As shown in FIG. 1 or FIG. 4, the mold (M) of the present embodiment includes a tread mold (M1) for molding the tread portion 3 and side molds (M2) for molding the sidewall portions 6. The pneumatic tire 1 has parting lines (ML) corresponding to boundaries between the tread mold (M1) and the side molds (M2), for example.

As shown in FIG. 2, it is preferred that the parting lines (ML) each include a step portion 13 having a height (h) of 0.4 mm or less. It is possible that the step portions 13 configured as such suppress the occurrence of cracks originating from the parting lines (ML), thereby, it is possible that the durability performance of the pneumatic tire 1 is improved.

Further, by setting the height (h) of each of the step portions 13 to 0.4 mm or less, an increase in the air resistance during running can be suppressed, therefore, it is possible that the fuel efficiency performance of the pneumatic tire 1 is improved. Here, the height (h) of each of the step portions 13 is the maximum protruding height in a direction perpendicular to the first side outer surface (6a) from the first side outer surface (6a) on both sides in the tire radial direction of the each of the step portions 13.

It is preferred that the step portion 13 of each of the parting lines (ML) is located between the second position (P2) and the third position (P3). Since the step portions 13 are positioned radially outside the second position (P2), it is possible that the decrease in air flow velocity near the maximum width position of the first side outer surface (6a) is suppressed, thereby, it is possible that the air resistance during running is decreased.

Since the step portions 13 are positioned radially inside the third position (P3), it is possible to suppress a decrease in the air flow velocity near the buttress in the radially outer area of the first side outer surface (6a), thereby, it is possible that the air resistance during running is reduced.

As shown in FIG. 1, the pneumatic tire 1 of the present embodiment has a specified tread portion position for mounting the tire on a vehicle regarding inner and outer sides of the tread portion with respect to the vehicle. The first ground contact edge (Te1) in the present embodiment is located on the outer side of the vehicle when mounted on the vehicle. It is preferred that the second ground contact edge (Te2) is located on the inner side of the vehicle when mounted on the vehicle. In the pneumatic tire 1 configured as such, at least the profile 2 on the outer side of the vehicle, which has a large effect on the air resistance, can be defined to have a shape that reduces the air resistance, therefore, it is possible that the fuel efficiency performance is improved.

The circumferential grooves 4 in the present embodiment include a second shoulder circumferential groove (4B) extending in the tire circumferential direction on the side closest to the second ground contact edge (Te2) between the tire equator (C) and the second ground contact edge (Te2). The circumferential grooves 4 further include a first crown circumferential groove (4C) extending in the tire circumferential direction between the tire equator (C) and the first shoulder circumferential groove (4A), and a second crown circumferential groove (4D) extending in the tire circumferential direction between the tire equator (C) and the second shoulder circumferential groove 4B, for example. The circumferential grooves 4 configured as such have excellent drainage properties and are useful for improving wet performance of the pneumatic tire 1. It should be noted that the number of the circumferential grooves 4 is not limited to four, but may be three or less, or five or more, for example.

The land regions 5 of the present embodiment have a second shoulder land region (5B) demarcated by the second shoulder circumferential groove (4B) and the second ground contact edge (Te2). It is preferred that the land regions 5 include a first middle land region (5C) demarcated by the first shoulder circumferential groove (4A) and the first crown circumferential groove (4C), and a second middle land region (5D) demarcated by the second shoulder circumferential groove (4B) and the second crown circumferential groove (4D). The land regions 5 include a crown land region (5E) demarcated by the first crown circumferential groove (4C) and the second crown circumferential groove (4D), for example. The land regions 5 configured as such have excellent rigidity and are useful for improving the steering stability performance of the pneumatic tire 1.

The profile 2 in the present embodiment includes a second side outer surface (6b) of the sidewall portion 6 extending inward in the tire radial direction from the second ground contact edge (Te2), and a second bead outer surface (7b) of the bead portion 7 located inward in the tire radial direction of the second side outer surface (6b).

The profile 2 may be formed symmetrically in the tire axial direction with the tire equator (C) as the center thereof, for example. In this case, the ground contact surface (3a), the second side outer surface (6b), and the second bead outer surface (7b) of the second shoulder land region (5B) are symmetrical to the ground contact surface (3a), the first side outer surface (6a), and the first bead outer surface (7a) of the first shoulder land region (5A), respectively. The pneumatic tire 1 configured as such can reduce the air resistance on the inner side of the vehicle during running, thereby, it is possible that the fuel efficiency performance is further improved.

The tread portion 3 in the present embodiment includes a tread rubber (3G) that forms the ground contact surface (3a). It is preferred that the tread rubber (3G) has a rubber hardness (Gc) of 48 degrees or more. Since the rubber hardness (Gc) of the tread rubber (3G) is 48 degrees or more, the tread rubber (3G) maintains a good shear stress, which helps to improve the steering stability performance and braking performance of the pneumatic tire 1. From such a point of view, it is more preferred that the rubber hardness (Gc) of the tread rubber (3G) is 55 degrees or more.

It is preferred that the rubber hardness (Gc) of the tread rubber (3G) is 74 degrees or less. Since the rubber hardness (Gc) of the tread rubber (3G) is 74 degrees or less, it is possible that input from the road surface during running is absorbed, therefore, it is possible that the ride comfort performance of the pneumatic tire 1 is improved. From this point of view, it is more preferred that the rubber hardness (Gc) of the tread rubber (3G) is 65 degrees or less.

For these reasons, the rubber hardness (Gc) of the tread rubber (3G) is preferably in the range from 48 to 74 degrees, and more preferably in the range from 55 to 65 degrees. It should be noted that the combination of the upper and lower limits of these numerical ranges can be selected arbitrarily. Here, the "rubber hardness" is a hardness measured by a type-A durometer in an environment of 23 degrees Celsius in accordance with Japanese Industrial Standards JIS-K6253.

The sidewall portions 6 in the present embodiment include sidewall rubbers (6G) forming the first side outer surface (6a) and the second side outer surface (6b). It is preferred that the sidewall rubbers (6G) have a rubber hardness (Gs) of 46 degrees or more. Since the rubber hardness (Gs) of the sidewall rubbers (6G) is 46 degrees or more, it is possible that a good lateral spring constant is maintained, which helps to improve the steering stability performance of the pneumatic tire 1. From such a point of view, it is more preferred that the rubber hardness (Gs) of the sidewall rubbers (6G) is 50 degrees or more.

It is preferred that the rubber hardness (Gs) of the sidewall rubbers (6G) is 60 degrees or less. Since the rubber hardness (Gs) of the sidewall rubbers (6G) is 60 degrees or less, input from the road surface during riding can be absorbed, thereby, it is possible that the ride comfort performance of the pneumatic tire 1 is improved. From this point of view, it is more preferred that the rubber hardness (Gs) of the sidewall rubbers (6G) is 55 degrees or less.

For these reasons, the rubber hardness (Gs) of the sidewall rubbers (6G) is preferably in the range from 46 to 60 degrees, and more preferably in the range from 50 to 55 degrees. It should be noted that the combination of the upper and lower limits of these numerical ranges can be selected arbitrarily.

It is preferred that the rubber hardness (Gs) of the sidewall rubbers (6G) is smaller than the rubber hardness (Gc) of the tread rubber (3G). It is possible that the pneumatic tire 1 configured as such efficiently absorb input from the road surface during running, therefore, it is possible that the ride comfort performance is improved.

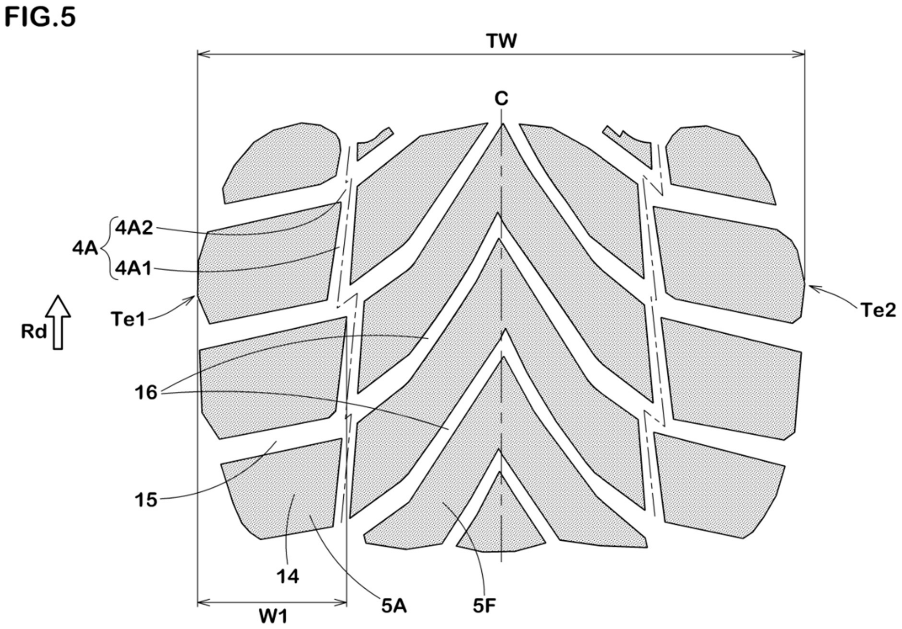

FIG. 5 is a schematic diagram showing the shape of the foot print of the pneumatic tire 1 according to the second embodiment of the present disclosure. The pneumatic tire 1 of the second embodiment includes the tread portion 3 bound with an intended tire rotational direction (Rd). The first shoulder circumferential groove (4A) of the second embodiment includes a plurality of first oblique portions (4A1) each extending from the inside to the outside in the tire axial direction as it goes from a heel-side (i.e., leading side) to a toe-side (i.e., trailing side) in the tire rotational direction (Rd), and a plurality of second oblique portions (4A2) each connecting a respective one of pairs of the first oblique portions (4A1) adjacent to each other in the tire circumferential direction.

Consequently, the first oblique portions (4A1) and the second oblique portions (4A2) are arranged alternately in the tire circumferential direction. Each of the second oblique portions (4A2) has a length in the tire circumferential direction smaller than a length of each of the first oblique portions (4A1) in the tire circumferential direction in the second embodiment. It is possible that the first shoulder circumferential groove (4A) configured as such achieves both high rigidity and the drainage property in the first shoulder land region (5A).

The first shoulder land region (5A) of the second embodiment has a plurality of first shoulder axial grooves 15 extending in the tire axial direction obliquely with respect to the tire circumferential direction, inclined from the heel-side to the toe-side in the tire rotational direction in the second embodiment, as they go from the first shoulder circumferential groove (4A) to the first ground contact edge (Tel). It is preferred that each of the first shoulder axial grooves 15 communicates with a respective one of the second oblique portions (4A2).

The first shoulder axial grooves 15 configured as such can allow air and water in the first shoulder circumferential groove (4A) to be smoothly discharged from the first ground contact edge (Tel) during running, therefore, it is possible that the air resistance during running is decreased and thus that the drainage property is improved. Further, the first shoulder land region (5A) includes a plurality of first shoulder blocks 14 demarcated by the first shoulder circumferential groove (4A), the first tread edge (Te1), and the first shoulder axial grooves 15. Each of the first shoulder blocks 14 has a width (W1) on the heel-side in the tire rotational direction (Rd) larger than that on the toe-side in the tire rotational direction, thereby suppressing slippage at the heel-side, which tends to slip significantly when the tire leaves the ground. Therefore, it is possible that the pneumatic tire 1 of the second embodiment achieves both the low fuel consumption performance and anti-wear performance.

The second oblique portions (4A2) are inclined to the same side as the first oblique portions (4A1) with respect to the tire axial direction, for example. The second oblique portions (4A2) configured as such, in cooperation with the first shoulder axial grooves 15 and first crown axial grooves 16 provided in a crown land region (5F), serve to decrease the air resistance during running and improve the drainage property. It should be noted that the second oblique portions (4A2) are not limited to this embodiment, and may be inclined to a side opposite to the first oblique portions (4A1), or may extend along the tire axial direction, for example.

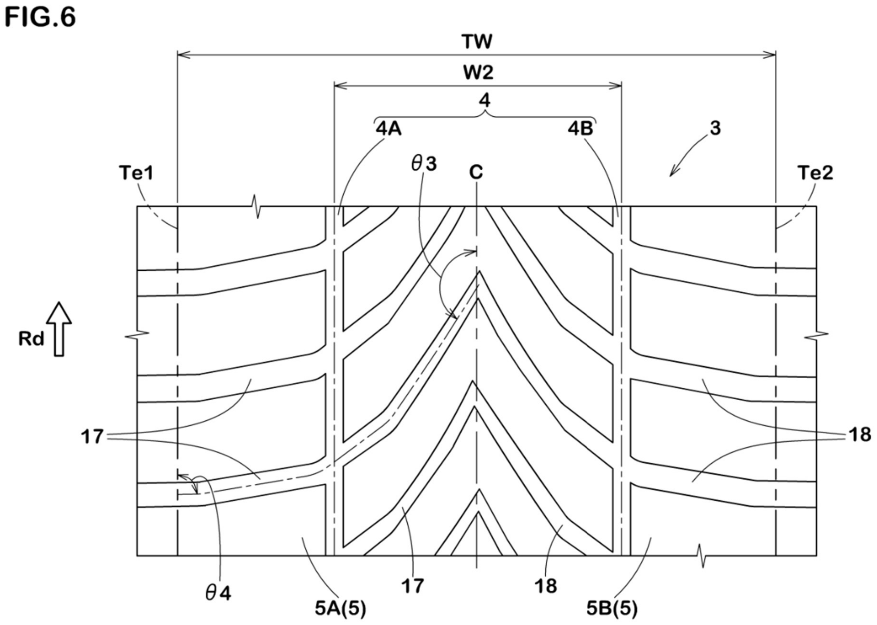

FIG. 6 is a development view of the tread portion 3 according to the third embodiment of the present disclosure. As shown in FIG. 6, the pneumatic tire 1 of the third embodiment has the tread portion 3 bound with the intended tire rotational direction (Rd). The tread portion 3 of the third embodiment has a plurality of first oblique grooves 17 each extending obliquely with respect to the tire circumferential direction from the tire equator (C) to and beyond the first ground contact edge (Tel) so as to cross the first shoulder circumferential groove (4A). The first oblique grooves 17 configured as such can allow air and water at and around the tire equator (C) to be smoothly discharged from the first ground contact edge (Tel) during running, thereby, it is possible that the air resistance during running is lowered and thus that the drainage property is improved. Further, as shown in FIG. 6, the tread portion 3 has an asymmetric tread pattern with respect to the tire equator.

Each of the first oblique grooves 17 of the third embodiment has a third angle θ3 which is an angle on the heel-side in the tire rotational direction (Rd) with respect to the tire equator (C), and a fourth angle θ4 which is an angle on the heel-side in the tire rotational direction (Rd) with respect to the first ground contact edge (Tel). Each of the first oblique grooves 17 has the third angle θ3 and the fourth angle θ4, and has a bent shape having a plurality of bent portions, for example. The first oblique grooves 17 are not limited to this embodiment, and may extend linearly or may be curved, for example.

As shown in FIG. 1 and FIG. 6, it is preferred that the third angle θ3 (in degree), the fourth angle θ4 (in degree), the distance (t) (in millimeter) between the first ground contact edge (Tel) and the tire equator (C) on the ground contact surface (3a), and the ground contacting width (TW) (in millimeter) satisfy the following Expression 1.

$$0.5 \leq \frac{\theta 3}{\theta 4} \times \frac{t}{TW} \times 10 \leq 2.5 \cdots (Expression\ 1)$$

The pneumatic tire 1 configured as such can reduce the air resistance during running while maintaining good rolling resistance, and is also excellent in the drainage property. Therefore, it is possible that the pneumatic tire 1 of the third embodiment achieves both the low fuel consumption performance and the wet performance.

In a more preferred embodiment, the third angle θ3 is an obtuse angle of 100 degrees or greater. Since the third angle θ3 is set to 100 degrees or more, it is possible that air and water at and around the tire equator (C) are smoothly discharged from the first ground contact edge (Tel). From this point of view, the third angle θ3 is more preferably 120 degrees or more, and even more preferably 130 degrees or more.

It is preferred that the third angle θ3 is 170 or less. By setting the third angle θ3 to 170 degrees or smaller, the rigidity in the vicinity of the tire equator (C) can be maintained, and thus it is possible that the steering stability performance of the pneumatic tire 1 is improved. From this point of view, the third angle θ3 is more preferably 165 degrees or less, and even more preferably 160 degrees or less.

For these reasons, the third angle θ3 is preferably in the range from 100 to 170 degrees, more preferably in the range from 120 to 165 degrees, and even more preferably in the range from 130 to 160 degrees. It should be noted that the combination of the upper and lower limits of these numerical ranges can be selected arbitrarily.

It is preferred that the fourth angle θ4 is equal to or greater than 10 degrees. By setting the fourth angle θ4 to 10 degrees or more, the rigidity of the first shoulder land region (5A) can be maintained, and thus the steering stability of the pneumatic tire 1 can be improved. From this point of view, the fourth angle θ4 is more preferably 15 degrees or greater, and even more preferably 20 degrees or greater.

It is preferred that the fourth angle θ4 is an acute angle of 89 degrees or less. By setting the fourth angle θ4 to 89 degrees or less, it is possible that air and water at and around the tire equator (C) is smoothly discharged from the first ground contact edge (Tel). From this point of view, the fourth angle θ4 is more preferably 60 degrees or less, and even more preferably 50 degrees or less.

For these reasons, the fourth angle θ4 is preferably in the range from 10 to 89 degrees, more preferably in the range from 15 to 60 degrees, and even more preferably in the range from 20 to 50 degrees. It should be noted that the combination of the upper and lower limits of these numerical ranges can be selected arbitrarily.

As shown in FIG. 6, it is preferred that a maximum distance (W2) in the tire axial direction from a center line in a width direction of the first shoulder circumferential groove (4A) to a center line in a width direction of the second shoulder circumferential groove (4B) is 50% or less of the ground contacting width (TW). By setting the maximum distance (W2) to 50% or less of the ground contacting width (TW), the rigidity of the first shoulder land region (5A) and the second shoulder land region (5B) is increased, the amount of skid during running is reduced, and thus the anti-wear performance of the pneumatic tire 1 can be improved.

Therefore, it is possible that the pneumatic tire 1 of the present embodiment achieves both the low fuel consumption performance and the anti-wear performance. From such a point of view, it is more preferred that the maximum distance (W2) in the tire axial direction from the center line of the first shoulder circumferential groove (4A) to the center line of the second shoulder circumferential groove (4B) is 45% or less of the ground contacting width (TW).

While detailed description has been made of the present invention according to an especially preferred embodiment, the present invention can be embodied in various forms without being limited to the illustrated embodiment.

[Examples]

Pneumatic tires of size 215/45R20 having the profile shown in FIG. 1 were made by way of test according to the specifications on Table 1. The test pneumatic tires were tested for the rolling resistance and the ride comfort performance. In addition, the air resistance was determined by using a pneumatic tire model of the same size as the test pneumatic tires. The test method and the determination method are as follows.

The test pneumatic tires in the standard state were mounted on a drum testing machine, and the rolling resistance was measured based on the force method of ISO28580. The results are expressed as an index based on Reference 1 being 100, wherein a larger numerical value indicates a smaller rolling resistance.

< Ride Comfort Performance >

The test pneumatic tires in the standard state were mounted on a small electric vehicle, and a test driver drove the test vehicle on a dry road surface having protrusions and evaluated the ride comfort performance by the test driver's senses. The test results are indicated as an index based on the Reference 1 being 100, wherein a larger numerical value indicates better ride comfort performance.

< Air Resistance >

By using a pneumatic tire model of the same size as the test pneumatic tires, an aerodynamic simulation of the front wheels when the tire model is mounted on a passenger car vehicle model was performed, and the air resistance coefficient was determined. The results are expressed as an index based on the Reference 1 being 100, wherein a larger index indicates a smaller air resistance during running.

The test results are shown in Table 1.

Table 1 (1/2)

| | Ref. 1 | Ref. 2 | Ref. 3 | EX. 1 | EX. 2 |
|---|---|---|---|---|---|
| First angle $\theta 1$ of First virtual line [degree] | 78 | 78 | 78 | 78 | 78 |
| Second angle $\theta 2$ of Second virtual line [degree] | 43 | 43 | 48 | 38 | 38 |
| ride comfort index ($\lambda \times$t/TW) [%] | 1.3 | 0.9 | 1.3 | 1.3 | 1.5 |
| Angle $\lambda$ of Belt cords | 26 | 18 | 26 | 26 | 30 |
| Distance (t) from First ground contact edge to Tire equator/ Ground contacting width (TW) [%] | 5 | 5 | 5 | 5 | 5 |
| Presence or Absence of Rim guard | Presence | Presence | Presence | Presence | Presence |
| Distance (d) from First rim edge to First bead outer surface [mm] | 10.5 | 10.5 | 10.5 | 10.5 | 10.5 |
| Location of Step portion | Between Second and Third positions | Between Second and Third positions | Between Second and Third positions | Between Second and Third positions | Between Second and Third positions |
| Rolling resistance [index] | 100 | 99 | 100 | 100 | 101 |
| Ride comfort performance [index] | 100 | 97 | 100 | 100 | 102 |
| Air resistance [index] | 100 | 100 | 99 | 102 | 102 |
| Overall performance [index] | 300 | 296 | 299 | 302 | 305 |

Table 1 (2/2)

| | EX. 3 | EX. 4 | EX. 5 | EX. 6 |
|---|---|---|---|---|
| First angle θ1 of First virtual line [degree] | 78 | 78 | 78 | 78 |
| Second angle θ2 of Second virtual line [degree] | 38 | 38 | 38 | 38 |
| ride comfort index (λ×t/TW) [%] | 1.3 | 1.5 | 1.3 | 1.3 |
| Angle λ of Belt cords | 26 | 30 | 26 | 26 |
| Distance (t) from First ground contact edge to Tire equator/ Ground contacting width (TW) [%] | 5 | 5 | 5 | 5 |
| Presence or Absence of Rim guard | Absence | Absence | Absence | Absence |
| Distance (d) from First rim edge to First bead outer surface [mm] | 10.5 | 1.2 | 1.2 | 1.2 |
| Location of Step portion | Between Second and Third positions | Between Second and Third positions | Radially inside of Second position | Radially outside of Third position |
| Rolling resistance [index] | 101 | 102 | 101 | 101 |
| Ride comfort performance [index] | 100 | 102 | 100 | 100 |
| Air resistance [index] | 120 | 124 | 119 | 120 |
| Overall performance [index] | 321 | 328 | 320 | 321 |

From the test results, it was confirmed that the test tires in Examples decreased the air resistance during running while maintaining the rolling resistance at the same level as the test tires in References and exhibited the same or better ride comfort performance compared with the test tires in the References. Further, the pneumatic tires in the Examples also had improved overall performance, which was evaluated by adding up the numerical values of the test results, compared with the References, therefore, it was confirmed that the pneumatic tires in the Examples achieved both the fuel efficiency performance and the ride comfort performance.

[Description of Reference Signs]

1       pneumatic tire
2       profile
3       tread portion
3a      ground contact surface
4A      first shoulder circumferential groove
5A      first shoulder land region
6a      first side outer surface
11      belt layer
11c     belt cord

**Claims**

1.   A pneumatic tire comprising a profile defined by an outer surface of the pneumatic tire in a standard state in a tire meridian section, wherein

the profile includes a ground contact surface of a tread portion extending from a first ground contact edge to a second ground contact edge, and a first side outer surface of one of sidewall portions extending inward in a tire radial direction from the first ground contact edge,
the first side outer surface has a first position defined thereon at a distance of 15% of a tire section height radially inward away from a tire equator on the ground contact surface,

the tread portion has a first shoulder circumferential groove extending in a tire circumferential direction on a side closest to the first ground contact edge between the tire equator and the first ground contact edge, and a first shoulder land region demarcated by the first shoulder circumferential groove and the first ground contact edge,

the ground contact surface has a first virtual line inclined inward in the tire radial direction as it goes outward in a tire axial direction,

the first virtual line is a tangent line at a midpoint in the tire axial direction of the first shoulder land region,

the first virtual line is inclined at a first angle in the range from 74 to 80 degrees with respect to the tire radial direction,

the first side outer surface has a second virtual line inclined to the same side as the first virtual line with respect to the tire radial direction,

the second virtual line is a tangent line at the first position,

the second virtual line is inclined at a second angle in the range from 36 to 40 degrees with respect to the tire radial direction,

the ground contact surface has a ground contacting width (TW),

the ground contacting width (TW) is a distance in the tire axial direction from the first ground contact edge to the second ground contact edge,

the first ground contact edge is located at a position radially inward away from the tire equator on the ground contact surface by a first distance (t),

the tread portion has a belt layer having belt cords arranged therein at an angle $\lambda$ in degree with respect to the tire circumferential direction,

a ride comfort index ($\lambda \times t$/TW) is defined by the angle $\lambda$ in degree of the belt cords with respect to the tire circumferential direction, the first distance (t) in millimeter in the tire radial direction from the first ground contact edge to the tire equator on the ground contact surface, and the ground contacting width (TW) in millimeter, and

the ride comfort index ($\lambda \times t$/TW) is in the range from 1.0 to 2.0.

2. The pneumatic tire according to claim 1, wherein the angle $\lambda$ of the belt cords is in the range from 22 to 34 degrees.

3. The pneumatic tire according to claim 1 or 2, wherein the first distance (t) is in the range from 2% to 6% of the ground contacting width (TW).

4. The pneumatic tire according to any one of claims 1 to 3, wherein a tire section width of the pneumatic tire is larger than a maximum width in a rim width direction of the standard rim by 6 mm or more.

5. The pneumatic tire according to any one of claims 1 to 4, wherein

the profile includes a first bead outer surface of one of bead portions located inward in the tire radial direction of the first side outer surface, and

when the pneumatic tire is mounted on the standard rim in the standard state, a distance (d) in the tire radial direction from a radially outer end of a first rim edge on the first ground contact edge side of the standard rim to the first bead outer surface at the axial position of the radially outer end of the first rim edge is 3 mm or less.

6. The pneumatic tire according to any one of claims 1 to 5 further comprising parting lines, wherein

the parting lines correspond to boundaries between a tread mold for molding the tread portion and side molds for molding the sidewall portions, and

the parting lines each include a step portion having a protruding height of 0.4 mm or less.

7. The pneumatic tire according to claim 6, wherein

the first side outer surface has a second position and a third position defined thereon,

the second position is a position radially inward from the tire equator on the ground contact surface by a distance of 25% of the tire section height,

the third position is a position radially inward from the tire equator on the ground contact surface by a distance of 19 mm, and

the step portion is located between the second position and the third position.

8. The pneumatic tire according to claim 7, wherein

the first side outer surface has a fourth position defined thereon,

the fourth position is located radially inside a virtual intersection between the first virtual line and the second virtual line, and

the first position is a center position in the tire radial direction between the second position and the fourth position.

9. The pneumatic tire according to any one of claims 1 to 8, wherein

the tread portion position for mounting the tire on a vehicle is specified regarding inner and outer sides of the tread portion with respect to the vehicle, and

the first ground contact edge is located on the outer side of the vehicle when the pneumatic tire is mounted on the vehicle.

10. The pneumatic tire according to any one of claims 1 to 9, wherein the ride comfort index ($\lambda \times t/TW$) is in the range from 1.3 to 2.0.

11. The pneumatic tire according to any one of claims 1 to 10, wherein

the tread portion (3) is bound with an intended tire rotational direction (Rd), and

the first shoulder land region (5A) has a plurality of first shoulder axial grooves (15, 17) extending in the tire axial direction obliquely from a heel-side to a toe-side in the tire rotational direction (Rd) from the first shoulder circumferential groove (4A) to and beyond the first ground contact edge (Tel).

12. The pneumatic tire according to any one of claims 1 to 11, wherein the first distance (t) is in the range from 3% to 5% of the ground contacting width (TW).

13. The pneumatic tire according to any one of claims 1 to 12, wherein

the first shoulder circumferential groove (4A) includes a plurality of first oblique portions (4A1) each extending from the inside to the outside in the tire axial direction as it goes from the heel-side to the toe-side in the tire rotational direction (Rd), and a plurality of second oblique portions (4A2) each connecting a respective one of pairs of the first oblique portions (4A1) adjacent to each other in the tire circumferential direction,

each of the second oblique portions (4A2) has a length smaller than a length of each of the first oblique portions (4A1), and

each of the first shoulder axial grooves (15) communicates with a respective one of the second oblique portions (4A2).

14. The pneumatic tire according to any one of claims 1 to 13, wherein a maximum width (W1) in the tire axial direction of the first shoulder land region (5A) is in the range from 20% to 30% of the ground contacting width (TW).

15. The pneumatic tire according to any one of claims 1 to 14, wherein

the tread portion (3) includes a tread rubber (3G) forming the ground contact surface (3a),

the one of the sidewall portions (6) includes a sidewall rubber (6G) forming the first side outer surface (6a),

the tread rubber (3G) has a rubber hardness in the range from 48 to 74 degrees,

the sidewall rubber has a rubber hardness (Gc) in the range from 46 to 60 degrees,

the rubber hardness (Gs) of the sidewall rubber (6G) is smaller than the rubber hardness (Gc) of the tread rubber (3G), and

the rubber hardness (Gc) of the tread rubber (3G) and the rubber hardness (Gs) of the sidewall rubber (6G) are measured by a type-A durometer in an environment of 23 degrees Celsius in accordance with Japanese Industrial Standards JIS-K6253.

# FIG.1

EP 4 768 275 A1

FIG.2

# FIG.3

FIG.4

M1
M2
M

EP 4 768 275 A1

FIG.5

EP 4 768 275 A1

FIG.6

EP 4 768 275 A1

Europäisches
Patentamt
European
Patent Office
Office européen
des brevets

# EUROPEAN SEARCH REPORT

**Application Number**

EP 25 22 4703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/331047 A1 (KAGAYA KEISUKE [JP]) 19 October 2023 (2023-10-19) | 1-6,10, 12,14,15 | INV. B60C9/18 |
| Y | * paragraph [0014] - paragraph [0025] * | 4-6,9, | B60C11/01 |
| | * paragraph [0035] - paragraph [0036] * | 11,13 | B60C11/03 |
| A | * paragraph [0053] - paragraph [0055] * * figures * | 7,8 | B60C9/28 |
| | ----- | | |
| X | EP 3 127 713 B1 (BRIDGESTONE CORP [JP]) 12 September 2018 (2018-09-12) | 1-3,10, 12,14 | |
| | * paragraph [0007] - paragraph [0010] * | | |
| | * paragraph [0075] * | | |
| | * paragraph [0026] - paragraph [0032] * | | |
| | * paragraph [0038] - paragraph [0039] * | | |
| | * paragraph [0086] * | | |
| | * figures * | | |
| | ----- | | |
| Y | EP 4 105 039 A1 (SUMITOMO RUBBER IND [JP]) 21 December 2022 (2022-12-21) | 9,11,13 | |
| A | * paragraph [0068] - paragraph [0069] * | 14 | |
| | * abstract * | | **TECHNICAL FIELDS SEARCHED (IPC)** |
| | * paragraph [0105] * | | |
| | * figures * | | B60C |
| | ----- | | |
| Y | JP 2023 091123 A (TOYO TIRE CORP) 30 June 2023 (2023-06-30) | 4-6 | |
| | * abstract; figures * | | |
| | ----- | | |
| Y | EP 4 328 048 A1 (SUMITOMO RUBBER IND [JP]) 28 February 2024 (2024-02-28) | 4-6 | |
| | * abstract; figures * | | |
| | ----- | | |

The present search report has been drawn up for all claims

| Place of search | Date of completion of the search | Examiner |
|---|---|---|
| Munich | 25 March 2026 | Avisse, Marylène |

EPO FORM 1503 03.82 (P04C01)

## ANNEX TO THE EUROPEAN SEARCH REPORT
## ON EUROPEAN PATENT APPLICATION NO.

EP 25 22 4703

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | | | Publication date | Patent family member(s) | | Publication date |
|---|---|---|---|---|---|---|
| US 2023331047 | A1 | | 19-10-2023 | CN | 115776950 A | 10-03-2023 |
| | | | | CN | 115996855 A | 21-04-2023 |
| | | | | DE | 112021002999 T5 | 16-03-2023 |
| | | | | DE | 112021003123 T5 | 25-05-2023 |
| | | | | JP | 7623602 B2 | 29-01-2025 |
| | | | | JP | 7633541 B2 | 20-02-2025 |
| | | | | JP | WO2022049865 A1 | 10-03-2022 |
| | | | | JP | WO2022049866 A1 | 10-03-2022 |
| | | | | US | 2023331047 A1 | 19-10-2023 |
| | | | | US | 2024217269 A1 | 04-07-2024 |
| | | | | WO | 2022049865 A1 | 10-03-2022 |
| | | | | WO | 2022049866 A1 | 10-03-2022 |
| EP 3127713 | B1 | | 12-09-2018 | CN | 106232383 A | 14-12-2016 |
| | | | | EP | 3127713 A1 | 08-02-2017 |
| | | | | JP | 6537496 B2 | 03-07-2019 |
| | | | | JP | WO2015159538 A1 | 13-04-2017 |
| | | | | US | 2017028788 A1 | 02-02-2017 |
| | | | | WO | 2015159538 A1 | 22-10-2015 |
| EP 4105039 | A1 | | 21-12-2022 | EP | 4105039 A1 | 21-12-2022 |
| | | | | JP | 7694177 B2 | 18-06-2025 |
| | | | | JP | 2022190895 A | 27-12-2022 |
| | | | | US | 2022402308 A1 | 22-12-2022 |
| JP 2023091123 | A | | 30-06-2023 | JP | 7759790 B2 | 24-10-2025 |
| | | | | JP | 2023091123 A | 30-06-2023 |
| EP 4328048 | A1 | | 28-02-2024 | EP | 4328048 A1 | 28-02-2024 |
| | | | | US | 2024066922 A1 | 29-02-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024231317 A
- JP 2025015421 A
- JP 2025015424 A
- JP 2025015425 A
- JP 2020019400 A